# EUROPÄISCHE PATENTSCHRIFT

(11) **EP 2 845 531 B1**
(45) Veröffentlichungstag und Bekanntmachung des Hinweises auf die Patenterteilung: **09.03.2016**
(21) Anmeldenummer: 13183235.4
(22) Anmeldetag: 05.09.2013
(51) Int. Cl.: A47L 13/12, A47L 13/42, B25G 3/18, F16B 7/04

(54) **Stielhalter für Betätigungsstiele oder dergleichen**
Handle holder for actuating handles or the like
Support pour manche de commande ou similaire

(43) Veröffentlichungstag der Anmeldung: 11.03.2015
(73) Patentinhaber: Nölle Profi Brush Bürsten- und Pinseltechnik e. K., 42327 Wuppertal (DE)
(72) Erfinder:
(74) Vertreter: Patentanwälte Dr. Solf & Zapf

(56) Entgegenhaltungen:
- WO-A1-2009/064238
- US-A1- 2007 017 072

## Beschreibung

Die vorliegende Erfindung betrifft einen Stielhalter zum Verbinden eines Betätigungsstiels mit einem Funktionsträger, z. B. einem Borstenträger oder dergleichen, umfassend ein Adapterteil mit einer Stielaufnahme sowie am Adapterteil befestigte Verbindungsmittel zum lösbaren Verbinden des Adapterteils mit dem Funktionsträger.

Ein derartiger bekannter Stielhalter besteht aus einem Drahtbügel mit endseitigen Führungszapfen, die in Bohrungen des Funktionsträgers bei der Montage eingreifen. Zwischen den Zapfen sind zwei verschwenkbare Hakenelemente angeordnet, die ebenfalls jeweils in Bohrungen des Funktionsträgers eingeführt werden. Die Hakenelemente sind als Drahtbiegeteile hergestellt und sind über mehrere Drahtwindungen auf den Drahtbügeln verschwenkbar gelagert. An dem Drahtbügel ist weiterhin ein Drehverschluss befestigt, der derart ausgebildet ist, dass durch Drehung seines Drehknopfes eine Schwenkbewegung der Hakenelemente erzeugt wird, so dass diese eine Raststellung einnehmen können, in der sie mit ihren Hakenfortsätzen den Funktionsträger bodenseitig hintergreifen, oder eine Ausraststellung, in der die Hakenfortsätze das Bodenteil des Funktionsträgers freigeben, so dass ein Herausziehen bzw. ein Einführen der Hakenelemente möglich ist. Dieses Adapterteil ist insofern nachteilig, da zwei Hände für seine Montage erforderlich sind, wobei eine aktive Verriegelung erfolgen muss. Zudem besteht eine Verletzungsgefahr, insbesondere an den drahtförmigen Hakenelementen. Auch erfordert die Verdrehung des Drehverschlusses einen relativ hohen Kraftaufwand.

Die US 2007/ 0017072 A1 offenbart einen Stielhalter der eingangs genannten Art. Hierbei besitzt das Adapterteil beidendig Aufnahmemuffen, wobei in einer ersten Aufnahmemuffe der Stiel aufgenommen und in der zweiten Aufnahmemuffe ein Steckerteil aufgenommen werden kann, welches im eingesteckten Zustand an seinem der zweiten Aufnahmemuffe gegenüberliegenden Ende mit einem Funktionsträger verbunden werden kann. Das Steckerteil wird über eine Drucktaste mit der Aufnahmemuffe verrastet und kann durch ein Eindrücken dieser Drucktaste entgegen der Kraft einer Feder von der Aufnahmemuffe gelöst werden. Die WO 2009/ 064238 A1 offenbart einen Stielhalter der eingangs genannten Art, wobei an dem Adapterteil zwei Rastnasen angeformt sind, die mit Ausnehmungen eines Sockels des Funktionsträgers verrastet werden können. Beim Lösen des Funktionsträgers müssen beide Nasen gleichzeitig eingedrückt werden, was aufwändig ist. Auch haben die Stielhalter der US 2007/0017072 A1 und der WO 2009/ 064238 A1 den Nachteil, dass die Drucktaste bzw. die Rastnase während des Herausziehens des Adapterteils eingedrückt werden muss und gemeinsam mit dem Steckerteil bzw. Adapterteil herausgezogen wird, wodurch die Gefahr einer Verletzung besteht.

Der vorliegenden Erfindung liegt die Aufgabe zu Grunde, einen gattungsgemäßen Stielhalter derart zu verbessern, dass ein selbsttätiges Verrasten des Adapterteils mit dem Funktionsträger und das Lösen der beiden Teile voneinander durch eine äußere Krafteinwirkung nur mit einer Hand durch einen Benutzer erfolgen kann.

Erfindungsgemäß wird dies durch die Merkmale des kennzeichnenden Teils des Anspruchs 1 erreicht. Durch die Vorspannung des Rasthebels mittels einer Feder derart, dass der Rasthaken automatisch die Raststellung einnimmt, wird ermöglicht, dass hierzu keine spezielle Einwirkung von Hand erforderlich ist. Vielmehr wird erfindungsgemäß durch den Einsteckvorgang des Rasthakens mit seinem Schaftabschnitt in ein in dem Funktionsträger vorhandenes erfindungsgemäßes Gegenrastelement bewirkt, dass der Rasthaken in seine Lösestellung bewegt wird. Nach Beendigung des Einsteckvorgangs verschwenkt der Rasthaken selbsttätig in seine Raststellung und hintergreift hierbei eine Hinterschnittfläche des Gegenrastelementes insbesondere formschlüssig. Hierbei ist der Rasthaken zur Hinterschnittfläche des Gegenrastelementes derart angeordnet, und insbesondere derart angeformt, dass unter Zugbeaufschlagung eine Selbsthemmung besteht, so dass der Rasthaken sich nicht lösen kann. Das Lösen des Adapterteils vom Funktionsträger erfolgt durch Krafteinwirkung über den Betätigungshebel auf den Rasthaken, so dass der Rasthaken innerhalb des Einsteckkanals des Gegenrastelementes seine Lösestellung einnehmen kann, wobei der Rastansatz des Rasthakens die Hinterschnittfläche nicht mehr hintergreift. In dieser Lösestellung kann dann der Rasthaken aus dem Gegenrastelement, das im Funktionsträger ausgebildet ist, herausgezogen werden.

Vorteilhafte Ausführungen der Erfindung sind in den Unteransprüchen enthalten und werden an Hand des in den beiliegenden Zeichnungen dargestellten Ausführungsbeispiels näher erläutert.

Es zeigen:
- Fig. 1: eine perspektivische Frontansicht eines erfindungsgemäßen Stielhalters mit Funktionsträger,
- Fig. 2: eine perspektivische Ansicht auf den Stielhalter gemäß Fig. 1 von seiner Rückseite,
- Fig. 3: eine Ansicht zum Teil entlang der Schnittlinie III-III in Fig. 1 geschnitten ohne Funktionsträger,
- Fig. 4a: einen Längsschnitt durch einen erfindungsgemäßen Funktionsträger,
- Fig. 4b: einen Längsschnitt durch einen erfindungsgemäßen Funktionsträger in alternativer Ausbildung,
- Fig. 5: eine Ansicht von unten auf ein erfindungsgemäßes Adapterteil,
- Fig. 6a - d: einen erfindungsgemäßen Stielhalter im Querschnitt in unterschiedlichen Montagestellungen mit und ohne Funktionsträger,
- Fig. 7: eine Ansicht eines erfindungsgemäßen Drahtbügels.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

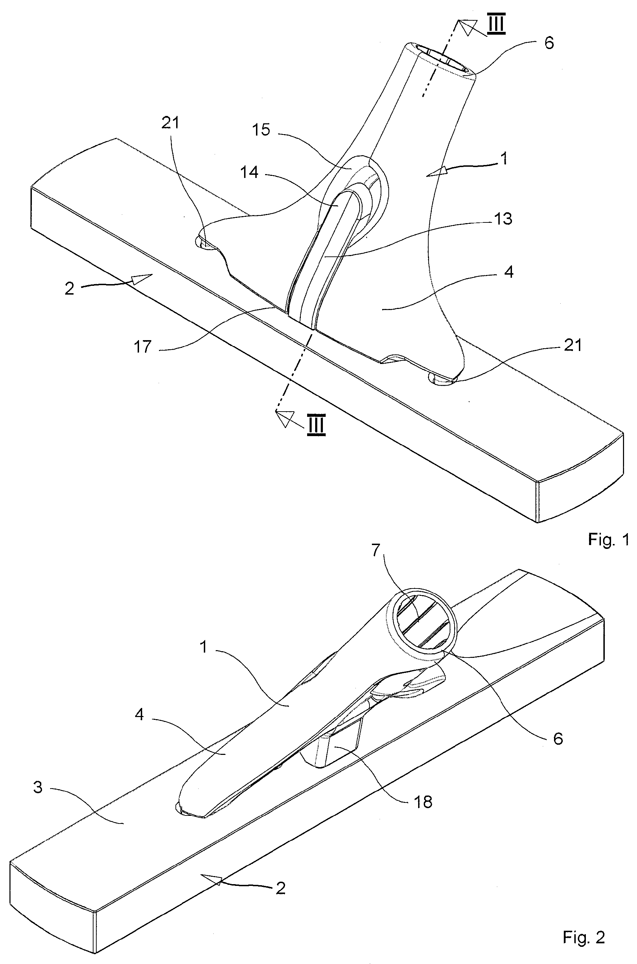

Wie in Fig. 1 und 2 dargestellt ist, besteht ein erfindungsgemäßer Stielhalter aus einem Adapterteil 1, das auf einem Funktionsträger 2, z. B. einem Borstenträger befestigbar ist. Das Adapterteil 1 umfasst einen Basisabschnitt 4, mit dem es auf einer oberen Auflagefläche 3 des Funktionsträgers 2 anliegt. Der Basisabschnitt 4 weist an seinem von der Auflagefläche 3 abgekehrten Ende eine Stielaufnahme 6 auf.

Die hülsenförmige Stielaufnahme 6 dient zur Aufnahme eines Endes eines nicht dargestellten Betätigungsstiels. Die hülsenförmige Stielaufnahme 6 besitzt insbesondere in Bezug auf ihre Längsachse einen kreisförmigen Innenquerschnitt, und an ihren inneren Umfangswänden mehrere umfangsgemäß voneinander beabstandete Längsrippen 7. Der Basisabschnitt 4 ist derart ausgebildet, dass im aufgesetzten Zustand seine Unterseite mit einer an ihr ausgebildeten Anlagefläche 8 parallel zur Auflagefläche 3 verläuft und an dieser anliegt, wobei das Adapterteil 1 derart ausgebildet ist, dass im aufgesetzten Zustand die Anlagefläche 8 vollflächig anliegt. Die hülsenförmige Stielaufnahme 6 ist derart ausgebildet, dass sie mit ihrer Längsachse mit der Auflagefläche 3 bzw. der Anlagefläche 8 einen spitzen Winkel einschließt.

Das Adapterteil 1 weist einen Rasthaken 9 auf, der als Verbindungsmittel zum lösbaren Befestigen des Adapterteils 1 an dem Funktionsträger 2 dient. Dieser Rasthaken 9 ist mit einer Schwenkachse 11, die parallel zur Anlagefläche 8 verläuft, im Adapterteil 1 schwenkbar gelagert. Hierbei ist die Lagerung derart, dass der Rasthaken 9 aus einer Raststellung gegen die Kraft einer Feder 12 in eine Ausraststellung bzw. Lösestellung durch Ausübung einer gegen die Federkraft wirkenden Lösekraft verschwenkbar ist, so dass er ohne die Ausübung dieser Lösekraft auf Grund der Federkraft der Feder 12 stets die Raststellung einnimmt. Der Rasthaken 9 ist mit einem Betätigungshebel 13 wirkverbunden, der sich in entgegengesetzter Richtung zum Rasthaken 9 in Bezug auf die Schwenkachse 11 erstreckt. Vorzugsweise sind der Betätigungshebel 13 und der Rasthaken 9 einstückig ausgebildet. Durch Druck auf den Betätigungshebel 13 an seinem freien Ende 14, d. h. dem der hülsenförmigen Stielaufnahme 6 zugekehrten Ende, verschwenkt der Rasthaken 9 um die Schwenkachse 11 aus seiner Raststellung in seine Ausrast- bzw. Lösestellung. Vorteilhafterweise ist zwischen dem Betätigungshebel 13 und dem Adapterteil 1 die Feder 12, die als Druckfeder ausgebildet ist, befestigt, so dass der Betätigungshebel 13 von der Feder 12 mit einer bestimmten Federkraft beaufschlagt ist und der Betätigungshebel 13 nur unter Überwindung der Federkraft der Feder 12 verschwenkt werden kann.

An Stelle der Druckfeder 12 könnte aber auch eine Zugfeder oder eine Spiralfeder als Feder 12 Verwendung finden, um die erforderliche Vorspannkraft zu erzeugen.

Um dem Betätigungshebel 13 genügend Freiraum für seine Schwenkbewegung zu ermöglichen, weist das Adapterteil 1 im Lagerbereich eine sich von der hülsenförmigen Stielaufnahme 6 bis zur Unterkante des Basisabschnittes 4 erstreckende Ausnehmung 15 auf. Der Betätigungshebel 13 ist mit der Schwenkachse 11 vorzugsweise mit einem zu dieser radial verlaufenden Hebelarm 16 verbunden.

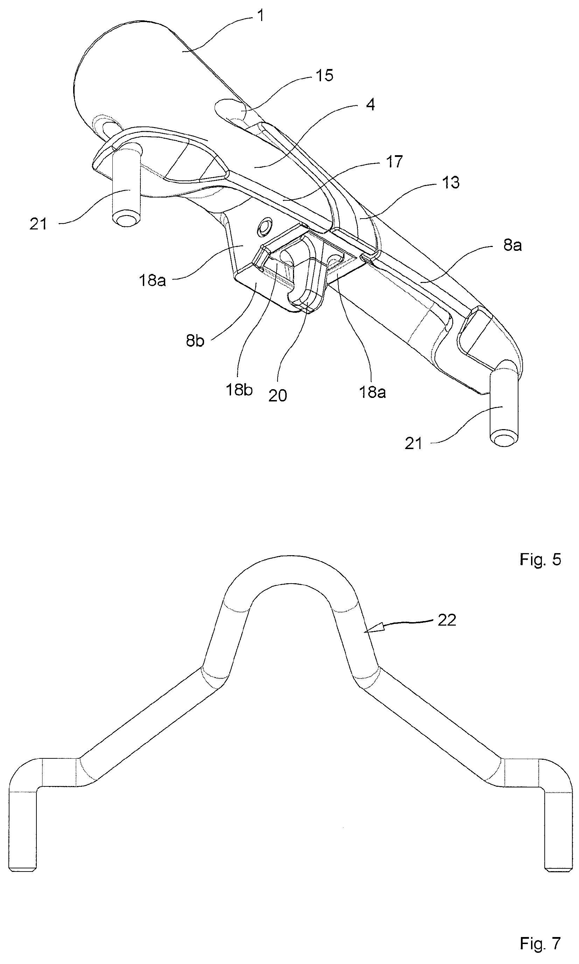

Das Adapterteil 1 weist an seiner Unterseite, die im auf dem Funktionsteil 2 befestigten Zustand dem Funktionsteil 2 zugekehrt ist, siehe Fig. 5, die Anlagefläche 8 auf. Diese besteht vorzugsweise aus zwei Flächenbereichen 8a, 8b, von denen eine im Bereich einer Vorderkante der Unterseite ausgebildet ist, und der andere die Unterseite eines die Schwenkachse 11 aufnehmenden Lagerbocks 18 im Adapterteil 1 bildet. Der Lagerbock 18 besteht aus zwei senkrecht zur Anlagefläche 8 verlaufenden Seitenwangen 18a, die Bohrungen zur Aufnahme der Schwenkachse 11 aufweisen, und die eine Öffnung 18b seitlich begrenzen, durch die der Rasthaken 9 verläuft, wobei der Rasthaken 9 und ein Schaftabschnitt 19 mit oberem Hakenansatz 20 über die Anlagefläche 8 vorsteht.

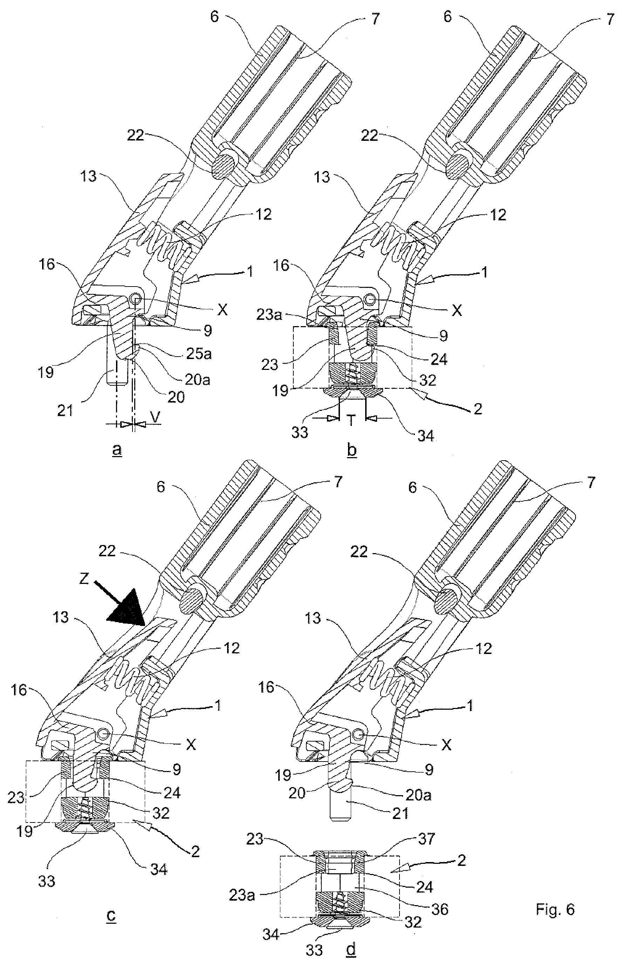

An diesen jeweiligen seitlichen Endbereichen des Basisabschnitts 4 sind Führungszapfen 21 an der Unterseite des Adapterteils 1 vorhanden, die über die Anlagefläche 8 vorstehen und parallel zu einander und senkrecht zur Anlagefläche 8 verlaufen. Zudem verlaufen die Führungszapfen 21 parallel zum Schaftabschnitt 19 des Rasthakens 9, wenn dieser sich in seiner Lösestellung, d. h. in seiner Ausraststellung befindet, siehe Fig. 6d. Der Rasthaken 9 befindet sich einerseits mittig auf der Unterseite des Basisabschnittes 4 und mittig zwischen den beiden Führungszapfen 21.

Das Adapterteil 1 ist vorzugsweise als Spritzgussteil ausgebildet und besitzt hierbei eine Drahteinlage 22, siehe Fig. 7, die in dem Adapterteil 1 integriert ist und der Form der Außenkontur und der Innenkontur des Adapterteils 1 angepasst ist. Die Enden der Drahteinlage 22 bilden die Führungszapfen 21, wobei die Führungszapfen 21 ebenfalls mit Kunststoff umspritzt sein können. Die Drahteinlage 22 wird vorzugsweise von einem Metalldraht, der verzinkt sein kann, mit einem Durchmesser von 7 mm gebildet.

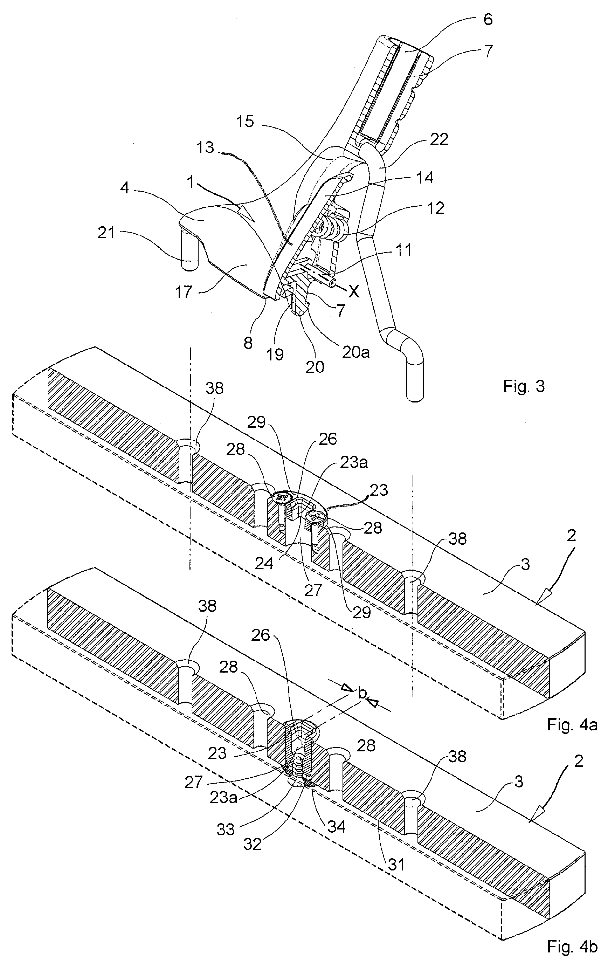

Damit das Adapterteil 1 mit dem Funktionsträger 2 verbunden werden kann, ist der Funktionsträger 2 an das Adapterteil funktionell angepasst. Hierzu ist erfindungsgemäß ein Gegenrastelement 23 vorgesehen. Dieses Gegenrastelement 23 weist einen Einsteckkanal 23a auf, in den der Rasthaken 9 mit seinem Schaftabschnitt 19 und dem endseitigen Hakenansatz 20 einführbar ist, siehe Fig. 6b, 6c. Hierbei ist es zweckmäßig, dass die Breite b des Einsteckkanals 23a und die Breite des Schaftabschnittes 19 derart angepasst sind, dass eine exakte Führung des Schaftabschnittes 19 in den Einsteckkanal 23a gegeben ist. Die Tiefe T des Einsteckkanals 23a ist derart, dass der Schaftabschnitt 19 mit seinem Hakenansatz 20 innerhalb des Einsteckkanals 23a seine Schwenkbewegung aus seiner Raststellung in seine Ausraststellung und umgekehrt durchführen kann, siehe Fig. 6b, 6c. Der Einsteckkanal 23a weist einen stufenförmigen Hinterschnitt 24 auf, wobei die Hinterschnittfläche senkrecht zur mittleren Längsachse des Einsteckkanals 23a verläuft. Die Hinterschnittfläche ist derart ausgebildet und angeordnet, dass in der Raststellung des Rasthakens 9 dieser mit seinem Hakenansatz 20 die Hinterschnittfläche hintergreift, so dass eine Formschlussverbindung vorhanden ist und das Adapterteil 1 mit dem Funktionsträger 2 fest verbunden ist. Indem die Schwenkachse 11 mit ihrer Mittelachse X-X von dem Anfang der Hinterschnittfläche um das Maß Y nach außen in Bezug auf die mittlere Längsachse A-A des Einsteckkanals 23a versetzt angeordnet ist, ist eine Selbsthemmung des Rasthakens 9 bei Zugbeaufschlagung in seiner Raststellung gegeben, so dass keine selbsttätige Entriegelung des Rasthakens 9 aus seiner Raststellung erfolgen kann, siehe Fig. 6a. Vorzugsweise wird das Gegenrastelement 23 von einem Hülsenkörper 26 gebildet, der als Spritzgussteil z. B. aus Kunststoff bestehen kann. Dieser Hülsenkörper 26 wird in eine Bohrung 27 des Funktionsträgers 2 eingepasst und mit diesem vorzugsweise verschraubt, und zwar beispielsweise von der Auflagefläche 3 des Funktionsträgers 2 her, z. B. mit zwei einander gegenüberliegenden Schrauben 28, die durch seitliche Ansätze 29 des Hülsenkörpers 26 eingeschraubt werden, siehe Fig. 4a. Alternativ kann auch eine Verschraubung von der Unterseite, d. h. einem Boden 31 des Funktionsträgers 2 erfolgen. Hierbei wird durch einen Boden 32 des Hülsenkörpers 26 eine Befestigung über eine Schraube 33 erfolgen, siehe Fig. 4b. Hierbei ist ein Verschlusselement 34 vorgesehen, das die Bohrung im Funktionsträger 2 endseitig abdeckt und randseitig auf dem Funktionsträger 2 aufliegt. Zum Befestigen wird die Schraube 33 durch das Verschlusselement 34 in den Boden 32 des Hülsenkörpers 26 eingeschraubt und hierdurch der Hülsenkörper 26 fixiert. Die Hinterschnittfläche kann durch einen Durchbruch 36 in der Wandung 37 des Hülsenkörpers 26 gebildet werden.

Es liegt ebenfalls im Rahmen der Erfindung, wenn das Gegenrastelement 23 einstückiger Bestandteil des Funktionsträgers 2 ist.

Weiterhin weist der Funktionsträger 2 Bohrungen 38 auf, und zwar in seiner Auflagefläche 3, die zur Aufnahme der Führungszapfen 21 dienen.

Der Rasthaken 9 ist an seiner Außenseite bzw. an seinem Hakenansatz 20 derart mit einer Abschrägung 20a oder Verrundung versehen, dass beim Einführen in den Einsteckkanal 23a des Gegenrastelementes 23 eine derartige Krafteinwirkung auf den Rasthaken 9 erfolgt, dass eine selbsttätige Verschwenkung in seine Lösestellung aus der durch die Federkraft bedingte Raststellung erfolgt, so dass das Adapterteil 1 einhändig in den Funktionsträger 2 bzw. das Gegenrastelement 22 eingeführt werden kann. Im in den Einsteckkanal 23a des Gegenrastelementes 23 eingeführten Zustand erfolgt durch die Federbeaufschlagung ein selbsttätiges Verschwenken des Rasthakens 9 in die Raststellung, wobei er dann die Hinterschnittfläche hintergreift, siehe Fig. 6b.

Das Lösen erfolgt über eine manuelle Betätigung des Betätigungshebels 13 durch Druckbeaufschlagung, siehe Pfeil Z in Fig. 6c, auf diesen, wodurch der Rasthaken 9 in seine Ausraststellung bzw. Lösestellung verschwenkt wird und somit aus dem Gegenrastelement 23 herausgezogen werden kann, so dass das Adapterteil 1 von dem Funktionsträger 2 abgenommen werden kann, siehe Fig. 6c, 6d.

### Bezugszeichenliste:

- 1: Adapterteil
- 2: Funktionsträger
- 3: Auflagefläche von 2
- 4: Basisabschnitt von 1
- 6: hülsenförmige Stielaufnahme
- 7: Längsrippen
- 8: Anlagefläche von 1
- 8a: Anlageflächenbereich
- 8b: Anlageflächenbereich
- 9: Rasthaken
- 11: Schwenkachse
- 12: Feder
- 13: Betätigungshebel
- 14: freies Ende von 13
- 15: Ausnehmung
- 16: Hebelarm
- 17: Vorderkante
- 18: Lagerbock
- 18a: Seitenwangen
- 18b: Öffnung
- 19: Schaftabschnitt
- 20: Hakenansatz
- 20a: Abschrägung
- 21: Führungszapfen
- 22: Drahteinlage
- 23: Gegenrastelement
- 23a: Einsteckkanal
- 24: stufenförmiger Hinterschnitt
- 25a: Anfang der Hinterschnittfläche
- 26: Hülsenkörper
- 27: Bohrung von 2
- 28: Schrauben
- 29: seitliche Ansätze von 26
- 31: Boden von 2
- 32: Boden von 26
- 33: Schraube
- 34: Verschlusselement
- 36: Durchbruch
- 37: Wandung
- 38: Bohrungen von 2

- b: Breite von 23
- T: Tiefe von 23
- H: Höhe von Einsteckkanal
- X-X: Mittelachse
- A-A: mittlere Längsachse
- Y: Maß
- Z: Pfeil in Fig. 6

## Patentansprüche

1. Stielhalter zum Verbinden eines Betätigungsstiels mit einem Funktionsträger (2), z. B. einem Borstenträger oder dergleichen, umfassend ein Adapterteil (1) mit einer Stielaufnahme (6) sowie am Adapterteil (1) befestigten Verbindungsmitteln (9) zum lösbaren Verbinden des Adapterteils (1) mit dem Funktionsträger (2),
**dadurch gekennzeichnet, dass**
die Verbindungsmittel aus einem Rasthaken (9) bestehen, der um eine Schwenkachse (11) des Adapterteils (1) schwenkbar derart gelagert ist, dass er aus einer Einraststellung gegen die Kraft einer Feder (12) in einer Ausraststellung schwenkbar ist und ein Betätigungshebel (13) mit dem Rasthaken (9) eine derartige Wirkverbindung aufweist, dass durch Verschwenken des Betätigungshebels (13) der Rasthaken (9) in seine Ausraststellung bewegbar ist.

2. Stielhalter nach Anspruch 1,
**dadurch gekennzeichnet, dass**
der Betätigungshebel (13) mit dem Rasthaken (9), insbesondere über einen Hebelarm (16), einstückig verbunden ist.

3. Stielhalter nach Anspruch 1 oder 2,
**dadurch gekennzeichnet, dass**
der Rasthaken (9) gegenüber einer Anlagefläche (8) des Adapterteils (1) mit einem Schaftabschnitt (19) mit endseitigem Hakenansatz (20) vorsteht.

4. Stielhalter nach einem der Ansprüche 1 bis 3,
**dadurch gekennzeichnet, dass**
das Adapterteil (1) aus einem einstückigen Kunststoffkörper besteht und eine Anlagefläche (8) zur Anlage an eine Auflagefläche (3) des Funktionsträgers (2) aufweist.

5. Stielhalter nach einem der Ansprüche 1 bis 4,
**dadurch gekennzeichnet, dass**
der Rasthaken (9) innerhalb einer Ausnehmung (15) des Adapterteils (1) schwenkbar gelagert ist.

6. Stielhalter nach einem der Ansprüche 1 bis 5,
**gekennzeichnet durch**
ein Gegenrastelement (23) mit einem Einsteckkanal (23a), der derart ausgebildet ist, dass er der Form des Schaftabschnittes (19) mit endseitigem Hakenansatz (20) derart in seiner Tiefe (T) angepasst ist, dass ein Verschwenken des Schaftabschnittes (19) von seiner Raststellung in seine Ausraststellung und umgekehrt möglich ist, und vorzugsweise seine Breite (b) der Breite des Schaftabschnittes (19) angepasst ist.

7. Stielhalter nach Anspruch 6,
**dadurch gekennzeichnet, dass**
der Einsteckkanal (23a) einen stufenförmigen Hinterschnitt (24) aufweist, wobei dessen Hinterschnittfläche senkrecht zur mittleren Längsachse (A-A) des Einsteckkanals (23a) verläuft.

8. Stielhalter nach Anspruch 7,
**dadurch gekennzeichnet, dass**
die Hinterschnittfläche derart angeordnet ist, dass in der Raststellung des Rasthakens (9) dieser mit seinem Hakenansatz (20) die Hinterschnittfläche hintergreift.

9. Stielhalter nach einem der Ansprüche 6 bis 8,
**dadurch gekennzeichnet, dass**
die Schwenkachse (11) mit ihrer Mittelachse (X-X) vor dem Anfang der Hinterschnittfläche um ein Maß (Y) derart versetzt angeordnet ist, dass bei Zugbelastung eine Selbsthemmung des Rasthakens (9) in der Raststellung gegeben ist.

10. Stielhalter nach einem der Ansprüche 6 bis 9,
**dadurch gekennzeichnet, dass**
das Gegenrastelement (23) als Hülsenkörper (26) ausgebildet ist, der in den Funktionsträger (2) einsetzbar und mit diesem insbesondere durch eine Schraubverbindung (28, 33) fixierbar ist.

11. Stielhalter nach einem der Ansprüche 6 bis 9,
**dadurch gekennzeichnet, dass**
das Gegenrastelement (23) einstückig mit dem Funktionsträger (2) ausgebildet ist.

12. Stielhalter nach einem der Ansprüche 3 bis 11,
**dadurch gekennzeichnet, dass**
das Adapterteil (1) eine Drahteinlage (22) aufweist, die mit ihren beiden Drahtenden gegenüber der Anlagefläche (8) aus dem Adapterteil (1) herausragt, wobei die beiden Drahtenden parallel zu dem Schaftabschnitt (19) in dessen Ausraststellung verlaufen und Führungszapfen (21) bilden.

13. Adapterteil (1) nach Anspruch 12,
**dadurch gekennzeichnet, dass**
die Drahteinlage (22) in dem aus einem Kunststoff-Spritzgussteil hergestellten Adapterteil (1) integriert ist.

14. Stielhalter nach einem der Ansprüche 1 bis 13,
**dadurch gekennzeichnet, dass**
die Anlagefläche (8) aus zwei Flächenbereichen (8a, 8b) gebildet wird, von denen ein Bereich im Bereich der Vorderkante (17) der Unterseite des Adapterteils (1) ausgebildet ist, und der andere Bereich die Unterseite eines die Schwenkachse (11) des Rasthakens (9) aufnehmenden Lagerbocks(18) ist.

15. Stielhalter nach einem der Ansprüche 1 bis 14,
**dadurch gekennzeichnet, dass**
die Feder (12) als Druckfeder, Zugfeder oder um die Schwenkachse (11) verlaufende Spiralfeder ausgebildet ist.

## Claims

1. Handle holder for connecting an actuating handle to a functional carrier (2), for example a bristle carrier or the like, comprising an adapter part (1) having a handle receptacle (6) and connecting means (9), fastened to the adapter part (1), for releasably connecting the adapter part (1) to the functional carrier (2),
**characterized in that**
the connecting means consist of an engagement hook (9) which is mounted so as to be pivotable about a pivot pin (11) of the adapter part (1) such that it is pivotable out of an engaged position counter to the force of a spring (12) into a disengaged position, and an actuating lever (13) is operatively connected to the engagement hook (9) such that, by pivoting the actuating lever (13), the engagement hook (9) is movable into its disengaged position.

2. Handle holder according to Claim 1,
**characterized in that**
the actuating lever (13) is connected in one piece to the engagement hook (9), in particular via a lever arm (16).

3. Handle holder according to Claim 1 or 2,
**characterized in that**
the engagement hook (9) protrudes with respect to an abutment surface (8) of the adapter part (1) with a shank portion (19) having an end-side hook extension (20).

4. Handle holder according to one of Claims 1 to 3,
**characterized in that**
the adapter part (1) consists of a one-piece plastics body and has an abutment surface (8) for butting against a bearing surface (3) of the functional carrier (2).

5. Handle holder according to one of Claims 1 to 4,
**characterized in that**
the engagement hook (9) is mounted in a pivotable manner within a recess (15) in the adapter part (1).

6. Handle holder according to one of Claims 1 to 5,
**characterized by**
a mating engagement element (23) having a plug-in channel (23a) which is configured such that it matches the shape of the shank portion (19) having an end-side hook extension (20) in terms of its depth (T) such that pivoting of the shank portion (19) from its engaged position into its disengaged position and vice versa is possible, and preferably has a width (b) matching the width of the shank portion (19).

7. Handle holder according to Claim 6,
**characterized in that**
the plug-in channel (23a) has a step-like undercut (24), wherein the undercut surface thereof extends perpendicularly to the central longitudinal axis (A-A) of the plug-in channel (23a).

8. Handle holder according to Claim 7,
**characterized in that**
the undercut surface is arranged such that, in the engaged position of the engagement hook (9), the latter engages behind the undercut surface with its hook extension (20).

9. Handle holder according to one of Claims 6 to 8,
**characterized in that**
the pivot pin (11) is arranged with its centre line (X-X) offset in front of the start of the undercut surface by an amount (Y) such that, in the event of tensile loading, the engagement hook (9) self-locks in the engaged position.

10. Handle holder according to one of Claims 6 to 9,
**characterized in that**
the mating engagement element (23) is configured as a sleeve body (26) which is insertable into the functional carrier (2) and is fixable thereto in particular by way of a screw connection (28, 33).

11. Handle holder according to one of Claims 6 to 9,
**characterized in that**
the mating engagement element (23) is formed in one piece with the functional carrier (2).

12. Handle holder according to one of Claims 3 to 11,
**characterized in that**
the adapter part (1) has a wire insert (22) which protrudes from the adapter part (1) with its two wire ends with respect to the abutment surface (8), wherein the two wire ends extend parallel to the shank portion (19) in its disengaged position and form guiding pins (21).

13. Adapter part (1) according to Claim 12,
**characterized in that**
the wire insert (22) is integrated in the adapter part (1) produced from an injection-moulded plastics part.

14. Handle holder according to one of Claims 1 to 13,
**characterized in that**
the abutment surface (8) is formed by two surface regions (8a, 8b), of which one region is formed in the region of the front edge (17) of the underside of the adapter part (1) and the other region is the underside of a bearing block (18) receiving the pivot pin (11) of the engagement hook (9).

15. Handle holder according to one of Claims 1 to 14,
**characterized in that**
the spring (12) is configured as a compression spring, tension spring or spiral spring extending around the pivot pin (11).

## Revendications

1. Support de manche pour relier un manche de manoeuvre avec un support fonctionnel (2), par ex. un support de brosse ou similaires, comprenant un élément adaptateur (1) avec un logement de manche (6), ainsi que des moyens de liaison (9) fixés sur l'élément adaptateur (1) pour la liaison amovible de l'élément adaptateur (1) avec le support fonctionnel (2),
**caractérisé en ce que**
les moyens de liaison sont constitués d'un crochet d'enclenchement (9) qui est logé en étant susceptible de pivoter autour d'un axe de pivotement (11) de l'élément adaptateur (1), de sorte à pouvoir pivoter d'une position enclenchée à l'encontre de la force d'un ressort (12) dans une position libérée et un levier de manoeuvre (13) est en interaction avec le crochet d'enclenchement (9) de telle sorte que, par pivotement du levier de manoeuvre (13), le crochet d'enclenchement (9) soit mobile dans sa position libérée.

2. Support de manche selon la revendication 1, **caractérisé en ce que** le levier de manoeuvre (13) est relié en monobloc avec le crochet d'enclenchement (9), notamment par l'intermédiaire d'un bras de levier (16).

3. Support de manche selon la revendication 1 ou la revendication 2, **caractérisé en ce que** par un tronçon de tige (19) avec un téton en forme de crochet (20) côté extrémité, le crochet d'enclenchement (9) déborde par rapport à une surface d'appui (8) de l'élément adaptateur (1).

4. Support de manche selon l'une quelconque des revendications 1 à 3, **caractérisé en ce que** l'élément adaptateur (1) est constitué d'un corps en matière plastique monobloc et comporte une surface d'appui (8) destinée à s'appuyer sur une surface de soutien (3) du support fonctionnel (2).

5. Support de manche selon l'une quelconque des revendications 1 à 4, **caractérisé en ce que** le crochet d'enclenchement (9) est logé en étant susceptible de pivoter à l'intérieur d'un évidement (15) de l'élément adaptateur (1).

6. Support de manche selon l'une quelconque des revendications 1 à 5, **caractérisé par** un élément (23) de contre-enclenchement avec un canal d'enfichage (23a) qui est conçu de sorte à être adapté dans sa profondeur (T) à la forme du tronçon de tige (19) avec téton en forme de crochet (20) côté extrémité, de sorte à permettre un pivotement du tronçon de tige (19) de sa position enclenchée dans sa position libérée et inversement et de préférence sa largeur (b) est adaptée à la largeur du tronçon de tige (19).

7. Support de manche selon la revendication 6, **caractérisé en ce que** le canal d'enfichage (23a) comporte une contre-dépouille (24) en gradins, la surface de contre-dépouille de celle-ci s'étendant à la perpendiculaire de l'axe longitudinal médian (A-A) du canal d'enfichage (23a).

8. Support de manche selon la revendication 7, **caractérisé en ce que** la surface de contre-dépouille est placée de sorte que dans la position d'enclenchement du crochet d'enclenchement (9), par son téton en forme de crochet (20), celui-ci s'accroche par l'arrière dans la surface de contre-dépouille.

9. Support de manche selon l'une quelconque des revendications 6 à 8, **caractérisé en ce qu'**avant le début de la surface de contre-dépouille, par son axe médian (X-X), l'axe de pivotement (11) est placé en étant déporté d'une dimension (Y), de sorte qu'en cas de contrainte par traction, un auto-blocage du crochet d'enclenchement (9) dans la position d'enclenchement soit donné.

10. Support de manche selon l'une quelconque des revendications 6 à 9, **caractérisé en ce que** l'élément de contre-enclenchement (23) est formé en tant que corps de douille (26) que l'on peut insérer dans le support fonctionnel (2) et que l'on peut fixer sur celui-ci, notamment par un assemblage par vis (28, 33).

11. Support de manche selon l'une quelconque des revendications 6 à 9, **caractérisé en ce que** l'élément de contre-enclenchement (23) est conçu en monobloc avec le support fonctionnel (2).

12. Support de manche selon l'une quelconque des revendications 3 à 11, **caractérisé en ce que** l'élément adaptateur (1) comporte un insert (22) en fil métallique, qui par ses deux extrémités de fil métallique saillit hors de l'élément adaptateur (1) par rapport à la surface d'appui (8), les extrémités de fil métallique s'étendant à la parallèle du tronçon de tige (19), dans la position libérée de celui-ci et formant des tenons de guidage (21).

13. Elément adaptateur (1) selon la revendication 12, **caractérisé en ce que** l'insert (22) en fil métallique est intégré dans l'élément adaptateur (1) fabriqué en une pièce en matière plastique moulée par injection.

14. Support de manche selon l'une quelconque des revendications 1 à 13, **caractérisé en ce que** la surface d'appui (8) est formée par deux zones de surface (8a, 8b) dont une zone est conçue dans la région de l'arête antérieure (17) de la face inférieure de l'élément adaptateur (1) et l'autre zone est la face inférieure d'un support de palier (18) réceptionnant l'axe de pivotement (11) du crochet d'enclenchement (9).

15. Support de manche selon l'une quelconque des revendications 1 à 14, **caractérisé en ce que** le ressort (12) est conçu en tant que ressort de pression, ressort de traction ou en tant que ressort en spirale s'étendant autour de l'axe de pivotement (11).
